Europäisches Patentamt

European Patent Office

Office européen des brevets

(19)

(11) EP 0 709 673 A1

(12) DEMANDE DE BREVET EUROPEEN

(43) Date de publication:
01.05.1996 Bulletin 1996/18

(51) Int. Cl.⁶: **G01N 29/26**, B06B 1/06

(21) Numéro de dépôt: 95202815.7

(22) Date de dépôt: 18.10.1995

(84) Etats contractants désignés:
**DE FR GB**

(30) Priorité: **25.10.1994 FR 9412755**

(71) Demandeurs:
• **LABORATOIRES D'ELECTRONIQUE PHILIPS**
**F-94450 Limeil-Brévannes (FR)**
Etats contractants désignés:
**FR**

• **PHILIPS ELECTRONICS N.V.**
**NL-5621 BA  Eindhoven (NL)**
Etats contractants désignés:
**DE GB**

(72) Inventeur: **Mallart, Raoul,**
**Société Civile S.P.I.D.**
**F-75008 Paris (FR)**

(74) Mandataire: **Landousy, Christian**
**Société Civile S.P.I.D.**
**156, Boulevard Haussmann**
**F-75008 Paris (FR)**

(54) **Dispositif de contrôle non destructif d'objets tubulaires creux par ultrasons**

(57)  Dispositif de contrôle non destructif d'objets tubulaires creux par ultrasons, comprenant, en association à l'étage d'émission des ondes ultrasonores et à l'étage de réception des signaux ultrasonores, une structure transductrice comprenant un ensemble de transducteurs individuels annulaires juxtaposés de façon coaxiale, ou, dans une variante de réalisation, une ou deux barrettes annulaires constituées d'un ensemble de transducteurs individuels juxtaposés. En outre, lesdits étages d'émission et de réception comprennent des moyens de sélection simultanée, sur ledit ensemble ou sur chacun desdits ensembles respectivement, d'au moins un transducteur émetteur (2(i)) et d'au moins un transducteur récepteur (2(j)) formant un sous-ensemble transducteur déplaçable à volonté par balayage électronique selon l'axe de succession des transducteurs, pour permettre une mise en oeuvre optimale de la méthode de contrôle dites TOFD.
Application : contrôle de présence de défauts dans des objets tubulaires creux.

FIG.7

## Description

La présente invention concerne un dispositif de contrôle non destructif d'objets tubulaires creux par ultrasons, comprenant une structure transductrice associée à un étage d'émission d'ondes ultrasonores pour l'excitation de ladite structure transductrice et à un étage de réception de signaux ultrasonores par cette structure.

L'invention concerne également une structure transductrice ultrasonore apte à être connectée à un dispositif de contrôle non destructif de ce type.

Les techniques ultrasonores jouent un rôle éminent en matière de contrôle non destructif des matériaux, en permettant d'évaluer certaines de leurs propriétés et, notamment d'y détecter la présence de discontinuités. Les techniques plus spécialement concernées sont celles qui, pour le test des objets, utilisent deux transducteurs distincts situés d'un même côté, l'un et l'autre, de l'objet à examiner et dont l'un fonctionne en émetteur et l'autre en récepteur, avec, entre les deux, un cheminement des ondes ultrasonores variable justement selon la présence ou l'absence de discontinuités. Ces techniques appelées par leur désignation en anglais ("pitch and catch techniques") sont réparties en deux catégories, dites respectivement directe et indirecte.

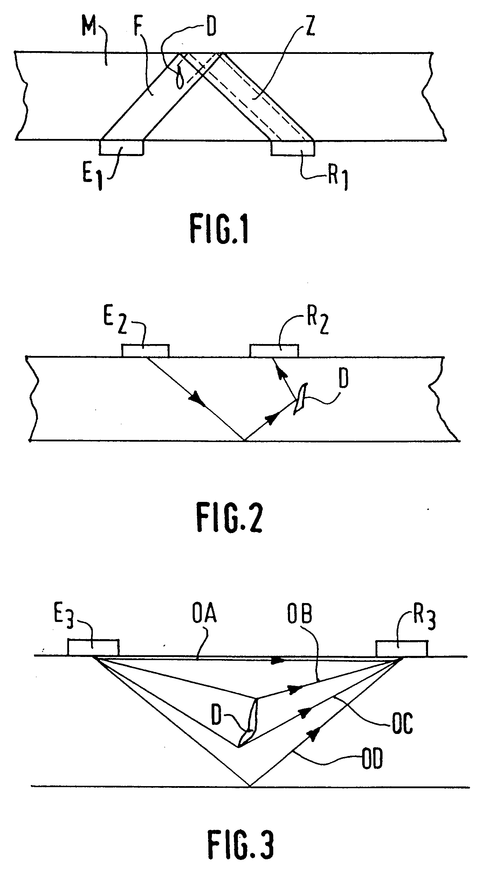

Dans la technique directe, illustrée sur la figure 1 où $E_1$ désigne le transducteur émetteur, le transducteur récepteur $R_1$ est disposé à l'emplacement où le faisceau ultrasonore réfléchi par le fond de l'objet M examiné est réellement attendu si aucune discontinuité n'existe dans cet objet. En présence d'une discontinuité, le faisceau ultrasonore F est au contraire interrompu, et l'absence de réception (sur le transducteur $R_1$) d'un faisceau réfléchi ou, en tout cas, une forte perturbation de ce faisceau constitue l'indication de détection d'une discontinuité D. Dans la technique indirecte, illustrée sur la figure 2 où $E_2$ désigne le transducteur émetteur, le transducteur récepteur $R_2$ est au contraire disposé à l'emplacement où le faisceau ultrasonore est attendu s'il est réfléchi par une discontinuité D.

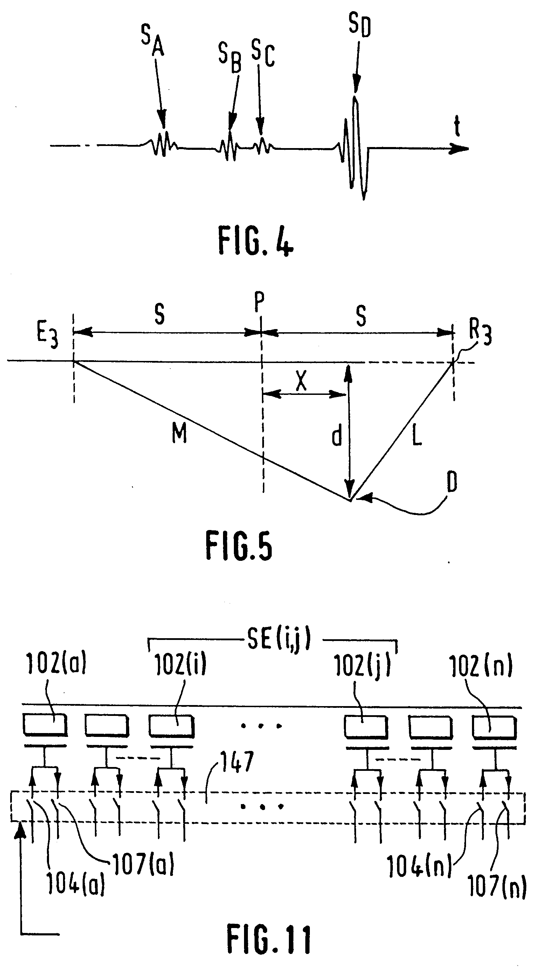

Une méthode de contrôle faisant principalement intervenir la diffraction du faisceau ultrasonore et procédant par observation ou mesure des temps de vol associés à différents trajets des ondes ultrasonores combine les caractéristiques des deux techniques précédentes. Selon cette méthode hybride (dite TOFD, d'après son nom en anglais "Time Of Flight Diffraction method") illustrée sur la figure 3, les ondes du faisceau ultrasonore divergent émis par le transducteur $E_3$ soit parviennent directement au transducteur récepteur $R_3$ (onde latérale $O_A$, pratiquement parallèle à la surface de l'objet contrôlé), soit subissent un effet de diffraction du fait de la présence d'une discontinuité D dans le matériau (ondes $O_B$, $O_C$ diffractées par les extrémités de la discontinuité), soit encore parviennent au transducteur $R_3$ après réflexion sur la paroi opposée du matériau (onde réfléchie $O_D$). La représentation de la position temporelle des signaux reçus par le transducteur $R_3$ met alors en évidence, comme le montre la figure 4, l'existence d'une discontinuité interne au matériau : on rencontre en effet successivement sur l'axe temporel de la figure 4 un signal $S_A$ correspondant à l'onde latérale $O_A$, deux signaux $S_B$, $S_C$ correspondant aux deux ondes diffractées $O_B$, $O_C$ et un signal $S_D$ correspondant à l'onde réfléchie $O_D$ (en l'absence de toute discontinuité, on ne recevrait que les signaux $S_A$ et $S_D$).

Si l'on appelle alors 2S la distance qui sépare les transducteurs émetteurs $E_3$ et récepteur $R_3$ solidaires l'un de l'autre, d la profondeur de l'extrémité de discontinuité qui engendre la diffraction, X l'écart latéral de cette extrémité $E_X$ par rapport au plan médian P situé à égale distance des transducteurs, M et L les distances respectives entre ladite extrémité et les transducteurs $E_3$ et $R_3$, et c la vitesse ultrasonore (par exemple en millimètres par seconde, lorsque les autres distances sont données en millimètres), le temps T que met l'onde ultrasonore pour être diffractée par l'extrémité $E_X$ puis reçue par le transducteur $R_3$, c'est-à-dire pour parcourir le trajet (M + L), est donné par l'expression (1) :

$$T = (M + L)/c \qquad (1)$$

ou encore :

$$T = (\sqrt{M^2} + \sqrt{L^2})/c \qquad (2)$$

$$T = (\sqrt{(S+X)^2 + d^2} + \sqrt{(S-X)^2 + d^2})/c \qquad (3)$$

La dérivée de cette expression (3) par rapport à la variable X montre alors que le temps T est minimal (et donc le signal détecté maximal) lorsque X = 0, c'est-à-dire lorsque l'extrémité $E_X$ considérée est dans le plan médian P situé à égale distance des deux transducteurs. La mise en oeuvre de la méthode TOFD consiste donc, une fois détectée la présence de signaux $S_B$, $S_C$ indiquant l'existence d'une discontinuité, à ajuster la position des transducteurs $E_3$, $R_3$ (d'écart constant 2S) pour rendre le temps T minimal (c'est-à-dire ce signal reçu maximal).

La méthode TOFD qui vient d'être rappelée est décrite par exemple dans la communication "Vessel nozzle inner radius examinations using ultrasonic time-of-flight diffraction (TOFD)" effectuée par D.F. Loy et J.A. Vano lors de la conférence "Vessel and Internals Inspection Conference", tenue à San Antonio (Texas, Etats-Unis), du 11 au 15 juillet 1994.

La mise en oeuvre de cette méthode implique cependant l'existence d'une mobilité de l'ensemble émetteur-récepteur par rapport à l'objet à contrôler, par glissement sur la surface de celui-ci dans le plan d'incidence contenant les ondes ultrasonores représentées sur la figure 3, mobilité sans laquelle l'ajustement de position des transducteurs émetteur et récepteur n'est pas possible. Le balayage mécanique qui doit être réalisé pour assurer cet ajustement limite malheureusement la cadence d'acquisition des données et rend le contrôle de pièces de grande surface plus long et plus coûteux. Le brevet des Etats-Unis d'Amérique US 4497210 décrit un dispositif de test par ultrasons dans lequel, pour faciliter cette mobilité, le balayage mécanique est remplacé par un balayage électronique sur une barrette unique, mais sans que la distance entre les transducteurs émetteur et récepteur reste constante. Par ailleurs, une telle mobilité est difficile à réaliser à l'intérieur d'objets à contrôler qui sont tubulaires.

En outre, au cours d'un tel ajustement, la position des transducteurs doit être repérée, à l'aide de moyens de localisation tel qu'un encodeur de position. En effet, une telle localisation est nécessaire si l'on veut, pour une interprétation plus aisée des résultats du contrôle de l'objet examiné, construire une image où par exemple l'un des axes de repérage correspond au temps de vol et l'autre axe, perpendiculaire au premier, correspond à la position des transducteurs émetteur et récepteur, avec une amplitude des signaux codée en niveaux de gris. Or tout balayage mécanique avec repérage de position est limité dans sa précision, et par suite également la résolution de l'image obtenue. De plus, on vient de constater qu'un déplacement à l'intérieur d'objets tubulaires était malaisé à réaliser, ce qui rend également difficile le repérage de position du dispositif de contrôle.

Un but de l'invention est de proposer un dispositif de contrôle non destructif qui soit particulièrement adapté au contrôle d'objets tubulaires creux tout en remédiant à l'ensemble des limitations mentionnées.

A cet effet l'invention concerne un dispositif tel que défini dans le préambule de la description et qui est en outre caractérisé en ce que ladite structure transductrice comprend un ensemble de transducteurs individuels annulaires juxtaposés de façon coaxiale, et en ce que lesdits étages d'émission et de réception comprennent des moyens de sélection simultanée d'au moins un transducteur émetteur et d'au moins un transducteur récepteur situés à une distance longitudinale constante l'un de l'autre et formant un sous-ensemble transducteur déplaçable à volonté par balayage électronique selon l'axe longitudinal de succession des transducteurs, ou qui, dans des réalisations très similaires, est soit caractérisé en ce que ladite structure transductrice comprend une barrette annulaire constituée d'un ensemble de transducteurs individuels juxtaposés circulairement, et en ce que lesdits étages d'émission et de réception comprennent des moyens de sélection simultanée d'au moins un transducteur émetteur et d'au moins un transducteur récepteur situés sur cette barrette, formant un sous-ensemble transducteur déplaçable à volonté par balayage électronique selon l'axe circulaire de succession des transducteurs, soit encore caractérisé en ce que ladite structure transductrice comprend deux barrettes annulaires constituées chacune d'un ensemble de transducteurs individuels juxtaposés, et en ce que lesdits étages d'émission et de réception comprennent des moyens de sélection simultanée d'au moins un transducteur émetteur situé sur l'une des barrettes et d'au moins un transducteur récepteur situé sur l'autre barrette, formant un sous-ensemble transducteur déplaçable à volonté par balayage électronique selon l'axe circulaire de succession des transducteurs,

Chacune des structures de dispositif ainsi proposées, adaptée à des objets à contrôler tubulaires creux et tout particulièrement, mais non exclusivement, à la détection de la présence de fissures circonférentielles, est en outre avantageuse en ce qu'elle permet, grâce au nombre élevé d'éléments transducteurs qui se succèdent d'une façon continue avec un pas très fin, de sélectionner avec précision un élément émetteur, ou un groupe d'éléments émetteurs, et un élément récepteur, ou un groupe d'éléments récepteurs, avec un repérage électronique de position extrêmement précis de ces éléments émetteur(s) et récepteur(s) sélectionnés. La mise en oeuvre de la méthode TOFD, difficile dans le cas d'objets tels que, notamment, les tubes générateurs de vapeur des circuits de centrales nucléaires, s'en trouve facilitée de façon déterminante, surtout dans de telles applications où ces objets à contrôler sont en nombre très élevé.

Selon un premier mode particulier de réalisation, le ou lesdits ensembles de transducteurs individuels sont réalisés d'une seule pièce, ou bien, dans une variante de réalisation conforme à l'invention, ce ou ces ensembles de transducteurs sont réalisés sous la forme d'au moins deux éléments identiques correspondant, une fois assemblés, à un anneau complet.

Un autre but de l'invention est de proposer une structure transductrice ultrasonore équipée d'un des moyens essentiels de l'invention.

A cet effet l'invention concerne une structure transductrice ultrasonore comprenant un ensemble de transducteurs individuels, caractérisée en ce que lesdits transducteurs sont de forme annulaire et juxtaposés de façon coaxiale, et en ce qu'audit ensemble sont associés des moyens de sélection simultanée d'au moins un transducteur émetteur, ou d'un groupe de transducteurs émetteurs, et d'au moins un transducteur récepteur, ou d'un groupe de transducteurs récepteurs, situés à une distance longitudinale constante l'un de l'autre et formant un sous-ensemble transducteur déplaçable à volonté par balayage électronique selon l'axe longitudinal de succession des transducteurs, ou bien, dans deux variantes de réalisation conformes à l'invention, une structure transductrice ultrasonore qui est soit caractérisée en ce qu'elle comprend une barrette annulaire, constituée d'un ensemble de transducteurs individuels juxtaposés circulairement, et en ce que leur sont associés des moyens de sélection simultanée d'au moins un transducteur émetteur, ou d'un groupe de transducteurs émetteurs, et d'au moins un transducteur récepteur, ou d'un groupe de transducteurs récepteurs, situés sur cette barrette et formant un sous-ensemble transducteur déplaçable à volonté par balayage électronique selon l'axe circulaire de succession des transducteurs, soit encore caractérisée en ce qu'elle comprend deux barrettes annulaires, constituées d'un ensemble de transducteurs individuels juxtaposés circulairement, et en ce que leur sont associés des moyens de sélection simultanée, sur l'une des barrettes, d'au moins un transducteur émetteur, ou d'un groupe de transducteurs émetteurs, et, sur l'autre barrette, d'au moins un transducteur récepteur, ou d'un groupe de transducteurs récepteurs, formant un sous-ensemble transducteur déplaçable à volonté par balayage électronique selon l'axe circulaire de succession des transducteurs.

Chacune des structures ainsi réalisées est en outre apte à recevoir du dispositif de contrôle non destructif auquel elle va être connectée les signaux de séquencement permettant l'exécution d'un balayage électronique dudit sous-ensemble transducteur.

Les particularités et avantages de l'invention apparaîtront maintenant de façon plus détaillée dans la description qui suit et dans les dessins annexés, donnés à titre d'explication et d'exemples non limitatifs et dans lesquels :

- les figures 1 et 2 illustrent deux techniques connues distinctes de contrôle non destructif de matériaux, et les figures 3 à 5 une troisième technique hybride (également connue) combinant des caractéristiques des deux premières :
- la figure 6 montre un premier exemple de réalisation du dispositif selon l'invention et la figure 7 montre de façon plus détaillée une structure transductrice ultrasonore prévue pour ce dispositif de contrôle de la figure 6 ;
- la figure 8 montre un deuxième exemple de réalisation du dispositif selon l'invention, et les figures 9 et 10 montrent de façon plus détaillée deux exemples de réalisation d'une structure transductrice ultrasonore prévue pour ce dispositif de contrôle de la figure 8 ;
- la figure 11 montre un exemple de réalisation d'une structure transductrice ultrasonore incorporant un moyen essentiel de l'invention, correspondant ici à l'exemple de réalisation de dispositif de contrôle de la figure 6.

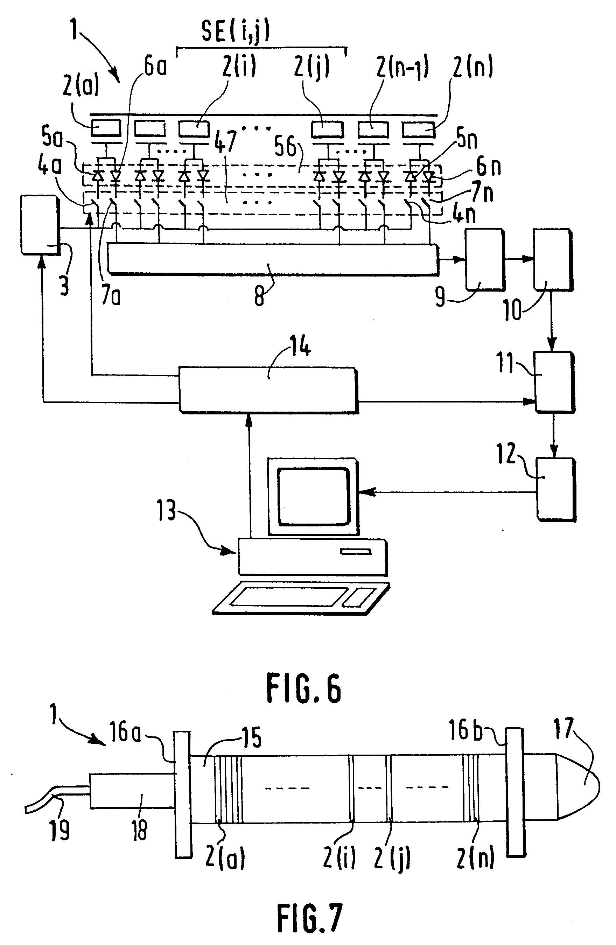

Le dispositif de la figure 6 comprend tout d'abord une structure transductrice ultrasonore 1, composée de tout un ensemble de transducteurs individuels annulaires 2(a) à 2(n). Ces transducteurs sont juxtaposés de façon coaxiale de manière à constituer ensemble une sorte de barrette cylindrique. Cette barrette est réalisée soit d'une seule pièce, soit sous la forme de deux éléments semi-annulaires assemblés, soit encore sous la forme d'un nombre supérieur d'éléments identiques correspondant, une fois assemblés, à un anneau complet. La structure 1, représentée sur la figure 7, est une sonde comprenant un corps cylindrique 15 qui porte les transducteurs individuels 2(a) à 2(n). La sonde comprend également deux butées 16a, 16b en forme de disque pour son guidage à l'intérieur de l'objet tubulaire creux à contrôler, une butée d'extrémité 17, et un embout 18 pour le raccordement d'un câble 19 amenant à la sonde les signaux d'excitation et véhiculant en retour les signaux de réception vers les circuits de traitement du dispositif de contrôle auquel la sonde est raccordée.

Par l'intermédiaire du câble de raccordement, les n transducteurs sont reliés à un étage d'émission qui comprend ici un générateur 3 d'impulsions à basse tension, 5 volts par exemple, puis, en sortie de celui-ci, n voies d'émission en parallèle comprenant chacune en série un interrupteur de validation 4a à 4n et un amplificateur haute tension 5a à 5n, pour obtenir par exemple une tension de 200 volts. Les n interrupteurs 4a à 4n font partie d'un circuit 47 de validation de voies, et les n amplificateurs 5a à 5n font partie d'un circuit d'amplification 56. Les sorties desdits amplificateurs de ce circuit 56 sont envoyées vers les transducteurs élémentaires correspondants.

Les n transducteurs sont d'autre part reliés à un étage de réception qui comprend ici n voies de réception en parallèle comprenant chacune en série un amplificateur 6a à 6n et un interrupteur de validation 7a à 7n. Les n amplificateurs 6a à 6n font partie du circuit 56 de validation de voies et les n interrupteurs 7a à 7n font partie du circuit 47 de validation de voies. Les sorties des n voies de réception sont envoyées vers un circuit de sommation 8, lui-même suivi, en série, d'un convertisseur analogique-numérique 9, d'une mémoire 10 de stockage de tous les signaux reçus pendant un balayage d'image complet (par exemple 128 lignes de 1024 points chacune), d'un circuit de conversion de balayage 11, pour passer par exemple de ladite image 128 x 1024 à une image affichée de 256 lignes de 256 points chacune, et d'une mémoire d'image vidéo 12, la visualisation des données stockées dans cette mémoire étant effectuée sur l'écran d'un ordinateur 13. Un séquenceur 14 assure le cadencement et la synchronisation des divers circuits, et comporte à cet effet des connexions notamment avec le générateur d'impulsions 3, le circuit de validation 47, le circuit de conversion de balayage 11, et l'ordinateur 13.

Le fonctionnement du dispositif est le suivant. Un transducteur annulaire 2(i), ou un petit groupe de tels transducteurs (par exemple trois ou quatre), émet, sur commande du générateur 3 lui envoyant des impulsions d'excitation de quelques centaines de volts, un faisceau d'ondes ultrasonores vers la zone à contrôler. Le choix de ce ou ces transducteurs est rendu possible par la présence du circuit de validation 47 qui, sous le contrôle du séquenceur 14, valide (par fermeture d'interrupteur(s)) la ou les voies d'émission appropriées. Les signaux reçus au cours de la mise en oeuvre de la méthode TOFD décrite précédemment sont reçus par un transducteur annulaire 2(j) (ou respectivement un petit groupe de tels transducteurs annulaires élémentaires), puis amplifiés et additionnés à l'aide respectivement des circuits d'amplification 56 et de sommation 8. La mémoire 10, convenablement adressée, reçoit et stocke, tir par tir, chaque signal obtenu après sommation puis numérisé par le convertisseur analogique-numérique 9. Le circuit de conversion de balayage 11 lit les signaux stockés en mémoire 10 et construit une image à partir d'eux, en ajustant le facteur d'échelle en X et en Y et en réalisant un zoom éventuel (ces dernières opérations sont permises grâce à un ré-échantillonnage des signaux acquis et à une interpolation). La nouvelle image après conversion de balayage est alors stockée dans la mémoire d'image

EP 0 709 673 A1

vidéo 12, puis visualisée sur l'écran de l'ordinateur 13. Conformément à la description précédente de la méthode TOFD, l'optimisation de détection des éventuelles discontinuités dans la zone d'objet à contrôler est obtenue par balayage électronique, en déplaçant le sous-ensemble SE(i,j) constitué par le transducteur ou groupe de transducteurs d'émission et le transducteur ou groupe de transducteurs de réception mais en maintenant leur écart constant à l'intérieur dudit sous-ensemble.

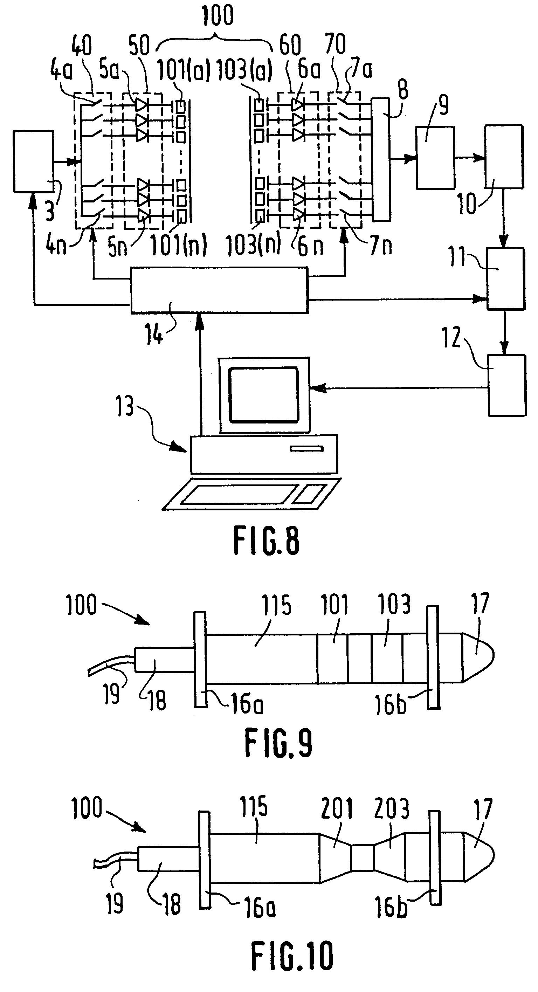

Dans un autre mode de réalisation, représenté sur la figure 8, le dispositif selon l'invention comprend cette fois une structure transductrice 100. Cette structure 100, représentée sur la figure 9, est une sonde comprenant un corps cylindrique 115 qui porte deux barrettes piézoélectriques annulaires 101 et 103 constituées chacune d'un ensemble de transducteurs élémentaires 101(a) à 101(n) et 103(a) à 103(n) juxtaposés sur le tour de l'anneau. Chacune de ces barrettes peut, comme précédemment, être réalisée soit d'une seule pièce, soit sous la forme de deux ou plusieurs éléments identiques correspondant, une fois assemblés, à un anneau complet, et destinés à venir s'emboîter sur le corps 115. La structure 100 comprend également, comme précédemment, deux butées 16a, 16b en forme de disque pour le guidage de la sonde à l'intérieur de l'objet tubulaire creux à contrôler, une butée d'extrémité 17, et un embout 18 pour le raccordement du câble 19 de liaison avec le dispositif de contrôle.

Dans cette structure transductrice 100, l'une des barrettes, par exemple la barrette 101 constituée des n transducteurs 101(a) à 101(n), est consacrée à l'émission et l'autre (la barrette 103 constituée des transducteurs 103(a) à 103(n)) à la réception. Les n transducteurs 101(a) à 101(n) sont reliés à un étage d'émission qui comprend, comme précédemment, le générateur 3 d'impulsions à basse tension, 5 volts par exemple, puis, en sortie de celui-ci, n voies d'émission en parallèle comprenant chacune en série un interrupteur de validation 4a à 4n et un amplificateur haute tension 5a à 5n. Les n interrupteurs 4a à 4n font partie d'un circuit 40 de validation de voies, et les n amplificateurs 5a à 5n font partie d'un circuit d'amplification 50. Les sorties desdits amplificateurs de ce circuit 50 sont envoyées vers les transducteurs élémentaires correspondants.

Les n transducteurs 103(a) à 103(n) de la barrette 103 consacrée à la réception sont, eux, reliés à un étage de réception qui comprend n voies de réception en parallèle comprenant chacune en série un amplificateur 6a à 6n et un interrupteur de validation 7a à 7n. Les n amplificateurs 6a à 6n font partie d'un circuit 60 d'amplification et les n interrupteurs 7a à 7n font partie d'un circuit 70 de validation de voies. Les sorties des n voies de réception sont envoyées comme précédemment vers le circuit de sommation 8, lui-même suivi, en série, du convertisseur analogique-numérique 9, de la mémoire 10 de stockage de tous les signaux reçus pendant un balayage d'image complet du circuit de conversion de balayage 11, et de la mémoire d'image vidéo 12, la visualisation des données stockées dans cette mémoire étant effectuée sur l'écran de l'ordinateur 13. Le séquenceur 14 assure le cadencement et la synchronisation des divers circuits, à savoir le générateur d'impulsions 3, les circuits de validation 40 et 70, le circuit de conversion de balayage 11, et l'ordinateur 13. Le fonctionnement du dispositif est le même que celui du dispositif de la figure 6, à cette exception près que n transducteurs sont maintenant affectés à l'émission et n transducteurs distincts à la réception.

Bien entendu, la présente invention n'est pas limitée aux exemples de réalisation qui viennent d'être décrits et représentés, à partir desquels des variantes peuvent être proposées. En particulier, sur la figure 9, les barrettes 101 et 103 sont de forme cylindrique, mais on peut, comme le montre la figure 10 illustrant une variante de réalisation de la sonde, prévoir deux barrettes 201 et 203 de forme tronconique, ce qui permet de mieux orienter les ondes ultrasonores émises vers la zone d'objet à contrôler. Les autres éléments ne sont pas modifiés et portent les mêmes références numériques. Il est possible, également, que la structure transductrice ne comprenne qu'une seule barrette annulaire comprenant un ensemble de transducteurs individuels juxtaposés circulairement, la sélection simultanée étant opérée sur cette barrette pour constituer un sous-ensemble transducteur déplaçable à volonté par balayage électronique selon l'axe circulaire de succession des transducteurs.

Par ailleurs, il faut noter que l'invention concerne non seulement des dispositifs de contrôle non destructif tels que ceux qui viennent d'être décrits, mais aussi des structures transductrices équipées d'un des moyens essentiels de l'invention.

Par exemple, dans le cas du dispositif représenté sur la figure 6, la sonde peut ne comprendre, comme on vient de le voir dans le cas de la sonde de la figure 7, que lesdits transducteurs 2(a) à 2(n), ou bien au contraire comprendre également, comme le montre l'exemple de réalisation de la figure 11, en association à chacun des transducteurs maintenant référencés 102(a) à 102(n), un circuit de validation 147, comprenant 2n interrupteurs 104(a) à 104(n) et 107(a) à 107(n) qui permettent de valider ou non un transducteur ou un groupe de transducteurs à l'émission (les interrupteurs 104(a) à 104(n)) et un transducteur ou un groupe de transducteurs à la réception (les interrupteurs 107(a) à 107(n)). Ainsi, et comme précédemment, on sélectionne un sous-ensemble transducteur déterminé SE(i,j), déplaçable à volonté par balayage électronique (donc sans déplacement physique) transversalement à la zone d'objet à contrôler, et de telle façon que le ou les transducteurs d'émission et le ou les transducteurs de réception restent, au cours du contrôle effectué, à une distance constante l'un de l'autre, ou les uns des autres respectivement. Dans ce cas, lorsque la structure transductrice ainsi constituée est connectée au dispositif de contrôle (qui, cette fois, ne comprend plus lesdits interrupteurs, puisque ceux-ci sont incorporés à la structure transductrice), il reste à fournir à celle-ci les signaux de séquencement permettant effectivement l'exécution du balayage, c'est-à-dire la fermeture ou l'ouverture de chacun des interrupteurs distinctement et de façon à assurer le déplacement (sans mouvement) du sous-ensemble transducteur SE(i,j). Cette

5

variante concerne également les autres sondes décrites, qui peuvent, comme dans cette réalisation de la figure 11, incorporer les interrupteurs de validation des transducteurs d'émission et de réception.

**Revendications**

1. Dispositif de contrôle non destructif d'objets tubulaires creux par ultrasons, comprenant une structure transductrice associée à un étage d'émission d'ondes ultrasonores pour l'excitation de ladite structure transductrice et à un étage de réception de signaux ultrasonores par ladite structure, caractérisé en ce que ladite structure transductrice comprend un ensemble de transducteurs individuels annulaires juxtaposés de façon coaxiale, et en ce que lesdits étages d'émission et de réception comprennent des moyens de sélection simultanée d'au moins un transducteur émetteur et d'au moins un transducteur récepteur situés à une distance longitudinale constante l'un de l'autre et formant un sous-ensemble transducteur déplaçable à volonté par balayage électronique selon l'axe longitudinal de succession des transducteurs.

2. Dispositif de contrôle non destructif d'objets tubulaire creux par ultrasons, comprenant une structure transductrice associée à un étage d'émission d'ondes ultrasonores pour l'excitation de ladite structure transductrice et à un étage de réception de signaux ultrasonores par ladite structure, caractérisé en ce que ladite structure transductrice comprend une barrette annulaire constituée d'un ensemble de transducteurs individuels juxtaposés circulairement et en ce que lesdits étages d'émission et de réception comprennent des moyens de sélection simultanée d'au moins un transducteur émetteur et d'au moins un transducteur récepteur situés sur cette barrette, formant un sous-ensemble transducteur déplaçable à volonté par balayage électronique selon l'axe circulaire de succession des transducteurs.

3. Dispositif de contrôle non destructif d'objets tubulaire creux par ultrasons, comprenant une structure transductrice associée à un étage d'émission d'ondes ultrasonores pour l'excitation de ladite structure transductrice et à un étage de réception de signaux ultrasonores par ladite structure, caractérisé en ce que ladite structure transductrice comprend deux barrettes annulaires constituées chacune d'un ensemble de transducteurs individuels juxtaposés et en ce que lesdits étages d'émission et de réception comprennent des moyens de sélection simultanée d'au moins un transducteur émetteur situé sur l'une des barrettes et d'au moins un transducteur récepteur situé sur l'autre barrette, formant un sous-ensemble transducteur déplaçable à volonté par balayage électronique selon l'axe circulaire de succession des transducteurs.

4. Dispositif selon l'une des revendications 1 à 3, caractérisé en ce que le ou lesdits ensembles de transducteurs individuels sont réalisés d'une seule pièce.

5. Dispositif selon l'une des revendications 1 à 3, caractérisé en ce que le ou lesdits ensembles de transducteurs individuels sont réalisés sous la forme d'au moins deux éléments identiques correspondant, une fois assemblés, à un anneau complet.

6. Structure transductrice ultrasonore comprenant un ensemble de transducteurs individuels, caractérisée en ce que lesdits transducteurs sont de forme annulaire et juxtaposés de façon coaxiale, et en ce qu'audit ensemble sont associés des moyens de sélection simultanée d'au moins un transducteur émetteur, ou d'un groupe de transducteurs émetteurs, et d'au moins un transducteur récepteur, ou d'un groupe de transducteurs récepteurs, situés à une distance longitudinale constante l'un de l'autre et formant un sous-ensemble transducteur déplaçable à volonté par balayage électronique selon l'axe longitudinal de succession des transducteurs.

7. Structure transductrice ultrasonore, caractérisée en ce qu'elle comprend une barrette annulaire, constituée d'un ensemble de transducteurs individuels juxtaposés circulairement, et en ce que leur sont associés des moyens de sélection simultanée d'au moins un transducteur émetteur, ou d'un groupe de transducteurs émetteurs, et d'au moins un transducteur récepteur, ou d'un groupe de transducteurs récepteurs, situés sur cette barrette et formant un sous-ensemble transducteur déplaçable à volonté par balayage électronique selon l'axe circulaire de succession des transducteurs.

8. Structure transductrice ultrasonore, caractérisée en ce qu'elle comprend deux barrettes annulaires, constituées chacune d'un ensemble de transducteurs individuels juxtaposés circulairement, et en ce que leur sont associés des moyens de sélection simultanée, sur l'une des barrettes, d'au moins un transducteur émetteur, ou d'un groupe de transducteurs émetteurs, et, sur l'autre barrette, d'au moins un transducteur récepteur, ou d'un groupe de transducteurs récepteurs, formant un sous-ensemble transducteur déplaçable à volonté par balayage électronique selon l'axe circulaire de succession des transducteurs.

FIG.1

FIG.2

FIG.3

$S_A$   $S_B$  $S_C$          $S_D$

t

FIG. 4

$E_3$          S          P          S          $R_3$

X

M          d          L

D

FIG.5

SE(i,j)

102(a)      102(i)          102(j)          102(n)

147

. . .          . . .

104(a)   107(a)          104(n)          107(n)

FIG.11

FIG.6

FIG.7

FIG.8

FIG.9

FIG.10

**EP 0 709 673 A1**

Office européen des brevets

**RAPPORT DE RECHERCHE EUROPEENNE**

Numero de la demande

EP 95 20 2815

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US-A-5 271 406 (GANGULY DIPANKAR ET AL) 21 Décembre 1993 * colonne 8, ligne 17 - ligne 32 * --- | 1,3,4 | G01N29/26 B06B1/06 |
| Y | EP-A-0 396 761 (HITACHI CONSTRUCTION MACHINERY) 14 Novembre 1990 * revendications 1-4; figures 3,10 * --- | 1,3,4 | |
| A | US-A-3 564 491 (GRANFORS ERNEST A ET AL) 16 Février 1971 * le document en entier * --- | 1,4 | |
| A | EP-A-0 493 146 (FRAMATOME SA) 1 Juillet 1992 * colonne 13, ligne 22 - ligne 47; figure 4A 4D * ----- | 1,4 | |

**DOMAINES TECHNIQUES RECHERCHES (Int.Cl.6)**

G01N
B06B
G10K
G01S

Le présent rapport a été établi pour toutes les revendications

| Lieu de la recherche | Date d'achèvement de la recherche | Examinateur |
|---|---|---|
| LA HAYE | 9 Janvier 1996 | Kouzelis, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

11